# EUROPEAN PATENT SPECIFICATION

(11) **EP 2 762 834 B1**
(45) Date of publication and mention of the grant of the patent: **22.03.2017**
(21) Application number: 13153646.8
(22) Date of filing: 01.02.2013
(51) Int. Cl.: G01C 21/16, G01C 21/20, G01C 21/34

(54) **An integrated global navigation satellite system and inertial navigation system**
Integriertes globales Navigationssatellitensystem und Trägheitsnavigationssystem
Système de navigation globale par satellite intégré et système de navigation inertiel

(43) Date of publication of application: 06.08.2014
(73) Proprietor: Intel Corporation, Santa Clara, CA 95054 (US)
(72) Inventor: Mertens, Christophe, 3010 Kessel-Lo (BE)
(74) Representative: Viering, Jentschura & Partner mbB Patent- und Rechtsanwälte

(56) References cited:
- JP-A- 2002 048 589
- US-A1- 2011 172 909
- US-A1- 2011 282 620
- US-A1- 2012 035 881
- US-A1- 2012 290 252

## Description

### Technical field

The present invention concerns the implementation of an integrated global navigation satellite system and inertial navigation systems in a portable mobile device having at least a pedestrian navigation mode and a road vehicle navigation mode. In particular the system addresses a problem of navigation mode selection at pedestrian speeds.

### Background and prior art

Global navigation satellite systems (GNSS) are used in numerous devices to calculate an instantaneous global position of the device, on or above the Earth's surface or at sea. GNSS uses the position to direct the user or a robot vehicle toward a programmed destination via a route appropriate to a mode of travel. For the purpose of the present invention the modes of travel are (1) pedestrian or (2) road. For these purposes pedestrian mode means travel on foot or vehicle (such as a wheel chair) in an essentially pedestrian area such as a footpath (sidewalk). Road mode is via a vehicle such as an automobile, truck, motorcycle or push bike on a road intended for vehicular traffic. It is important for a navigation device to distinguish between the modes in order to select appropriate guidance to a user. While many devices already provide means for the user to make a selection, it is not unusual for the user to forget to make the mode switch.

GNSS devices rely on a receiver which receives a signal from each of at least four GPS satellites to locate the instantaneous position of the device. Each satellite signal carries a time signal which allows the receiver device to calculate the transit time from the signal transmission to reception assuming that each signal travels in a straight line. From this, the device can calculate its position with an accuracy of the order of tens of meters and often much better. Accuracy depends on a number of factors including the quality of the device but is generally very dependent on the number of satellites which are simultaneously visible to the device.

GNSS devices commonly correlate the position with coordinates on a map contained within a memory and use this information to provide guidance information to the user in the form of audible and/or visible instructions to follow a path to a destination. GNSS cannot directly determine the orientation and speed of the device and hence the user. Speed and orientation are only determined by inference from changes in position over time. It is essential that the device infer the correct orientation and speed in order for the device to provide accurate appropriately timed instructions.

One factor which leads to errors of position in GNSS is a situation which leads to one or more satellite signals travelling over a non-linear path to the GNSS device receiver. This can occur in canyon-like environments where a satellite signal is reflected from nearby structures, such as buildings, before reaching the device receiver. Because this leads to errors of position, multi-pathing also leads to errors of heading and speed. When the GNSS incorrectly positions the GNSS device on the map (map snapping) it will provide false guidance, potentially by setting a false navigation mode.

WO2008/148794 provides an example of the use of an accelerometer inertial sensor to correct for multipath error in a GNSS. This system senses events where reception of a multi-path signal indicates that the GNSS device has moved between two points which are incompatible with the signal from the inertial sensor in the same time period.

In some cases such as US2010/114477 a GNSS system switches between pedestrian mode and road mode in response to the speed of the device. However, especially in urban environments, traffic congestion results in vehicle road speeds similar to pedestrian speeds which can result in an incorrect mode selection by the device.

When the GNSS device is carried by a pedestrian in a pedestrian mode the pedestrian can and often does change direction rapidly and frequently, for example to avoid other pedestrians and obstacles along the path of navigation. In the road mode the device will move with the vehicle. The vehicle cannot change direction with the abruptness of a pedestrian and will be constrained to navigate the road. US2011/202754 distinguishes between a pedestrian mode and road mode by reference to signals from an inertial sensor such as an accelerometer. The system of US2011/202754 correlates the fluctuations of an accelerometer signal with the expected fluctuations in acceleration arising from a walking or running person and indicates a pedestrian mode if the correlation is high and other factors such as a speed threshold are not exceeded. Road mode is determined by the speed of the vehicle exceeding a threshold and the GNSS device being positioned on the road. It will be appreciated that this system remains susceptible to incorrect mode selection where low road speeds and incorrect map snapping to a pedestrian area occur due to multi-path signal reception.

In the road mode a GNSS device, especially one embedded in a cell-phone may be handled by a user in a manner which generates signals indicative of abrupt changes of direction compatible with a pedestrian mode. In such situations the GNSS device may switch to pedestrian mode and calculate the route to destination accordingly although the device is travelling in a vehicle.

US 2012/290252 A1 discloses an electronic device operable to determine a Global Positioning System (GPS) mode of operation based upon accelerometer input (cf. Abstract).

JP 2002 048589 A discloses that the operating state of a mobile is measured from the information from an acceleration sensor, an angular velocity sensor, and an atmospheric pressure sensor, and that the position of the mobile is measured from PHS and GPS (cf. Abstract).

### Statements of invention

Accordingly, the present invention aims to alleviate at least some of the technical limitations of the prior art by the provision of a portable mobile device and a corresponding process according to the appended claims.

By the term "portable" it is meant a man portable device and by the term "communication device" we refer to any device comprising an antenna.

According to a further aspect of the present invention there is provided code adapted for communication via large area network, WiFi, cell phone network or recorded on physical media for execution in a processor in a portable device to implement the process according to the second aspect of the present invention recited above.

The present invention relies on the discovery that the frequency of excitations of an inertial sensor carried by a pedestrian, including stationary manipulations of the device, occur typically at a frequency of less than ten hertz, and usually well below ten hertz. An inertial sensor conveyed in a device travelling in a vehicle in road mode senses excitations at a frequency typically below twenty five hertz. Such road mode inertial excitations are typically induced by vehicle engine motion, road condition, air-conditioning activity, windscreen wiper activity. Evidently from this, a predominance of excitations in a low frequency band, corresponding to the pedestrian mode, will indicate pedestrian mode navigation. Conversely a predominance of excitations in a high frequency band is indicative of road mode navigation. In general, the comparator outputs a signal indicative of pedestrian mode navigation when the low frequency band power spectrum density exceeds the high frequency band power spectrum density. Conversely the comparator outputs a signal indicative of road mode navigation when the high frequency band power spectrum density exceeds the low frequency band power spectrum density. However, as explained more detailed later, dominance may be determined by more complex criteria, to address a condition where each band signal strength is low or there is not much difference. In this condition the dominant frequency band power spectrum density may not be the highest frequency band power spectrum density.

Preferably the low frequency band is between two and ten hertz and the high frequency band is between ten and twenty five hertz.

The invention also contemplates the possibility of a condition where the power spectrum densities of each of the low and high frequency bands are both strongly present. This condition may occur where a vehicle passenger or driver is manipulating the device in a slow, or erratically moving vehicle or a vehicle stationary in traffic. In this condition the difference between the low frequency power spectrum density and the high frequency power spectrum density may be small. The dominant power spectrum density may change frequently. Consequently, the mode signal output from the comparator may change frequently over a short time leading to frequent and confusing changes in navigation mode. To avoid this problem the system and process is set so that the comparison of the power spectrum densities may only occur if the low band power spectrum density exceeds a predetermined threshold value.

The step of comparing may conveniently comprise the calculation of a power spectrum density ratio of the low band power spectrum density and the high band power spectrum density. The system will preferably determine pedestrian mode where:
a. the low band power density spectrum exceeds a first low band power density spectrum threshold and
b. if the power spectrum density ratio exceeds a higher power spectrum density threshold ratio; or
c. the low band power density spectrum exceeds a second low band power spectrum density threshold, higher than the first low band power spectrum density threshold and
d. the power spectrum density ratio exceeds a lower power spectrum density threshold ratio.

Preferably the higher power spectrum density threshold ratio is between 1 and 2, and more preferably 1.5. Preferably the second low band power spectrum density threshold is at least 1.5 times the size of the first low band power spectrum density threshold and more preferably twice the size of the first low band power spectrum density threshold. Preferably the lower power spectrum density threshold ratio is between 0.5 and 1 and more preferably 0.75.

Conditions (a) and (b) indicate that the pedestrian is walking. Conditions (c) and (d) indicate that the pedestrian is running.

Under the conditions expressed in the immediately preceding paragraph the navigation mode may be instantly switched. However, a delay timer may be provided to delay cancellation of the pedestrian mode, and consequent switching to the road mode. The delay timer may be implemented when the low frequency band power spectrum density falls briefly below a large fraction of the first low frequency band power spectrum density threshold, but continues to exceed the high frequency band power spectrum density. The large fraction may be 80% of the threshold at (a). The timer may be provided by a countdown timer which may count down from a preset timer value which may be 512. The counter may be decremented by one for each sequential cycle of the process that the low band power spectrum density remains at less than 80% of the threshold value. When the threshold power density spectrum value is exceeded the timer may be reset, preferably by resetting the countdown timer to its initial value, for example 512.

The present invention provides a means of distinguishing between pedestrian and road navigation modes where simple speed or position and map snapping are unreliable. The device and process may distinguish between the user manipulating a device while walking and the user manipulating the device while in a car. The device and process may distinguish between distinguish between a pedestrian carrying and manipulating the device while walking at low speed and a device fixed in a road vehicle travelling at low speed or stationary in congested traffic. The load on the device processor imposed by the execution of the process is constant.

### Brief Description of Drawings

A device and process embodying the present invention will now be described, by way of example only, with reference to the accompanying illustrative drawings, wherein:
figure 1 illustrates a device in the form of a cellphone;
figure 1 A is a simplified diagram of the main cell phone components;
figure 2 is a diagrammatic view of the components of the device;

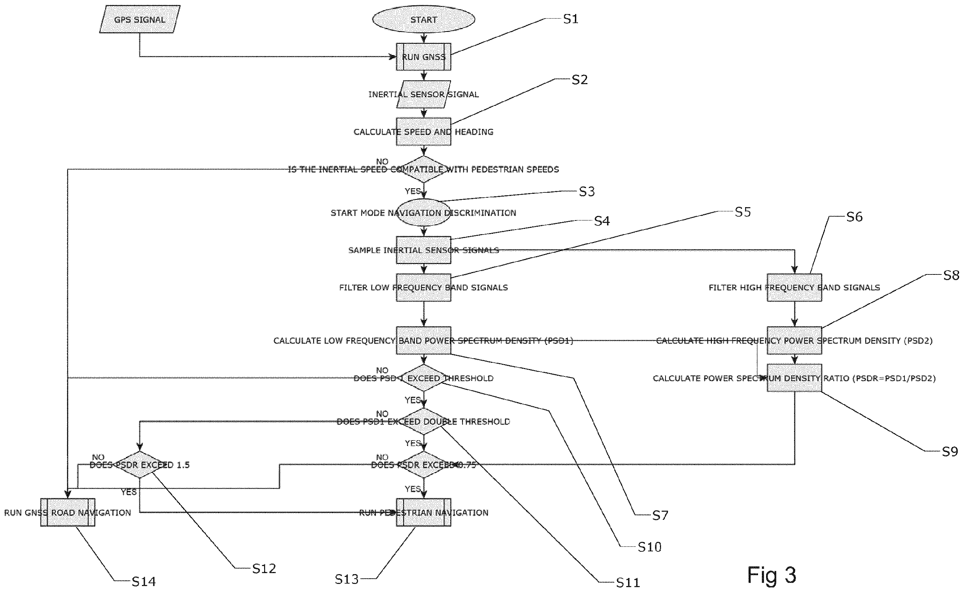

figure 3 is a flow chart of the process implemented by the device;
figure 4 is a chart characteristic of the low and high frequency band excitation of the inertial sensor for a journey comprising a mixed sequence of pedestrian and road travel; and
figure 5 is a chart of the low and high frequency band power spectrum densities of the journey sample in figure 4.

### Detailed description of drawings

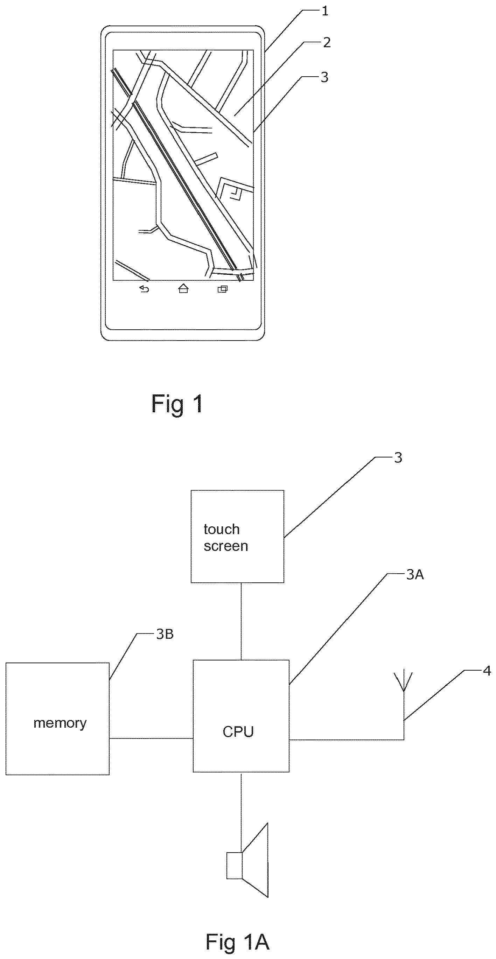

Figure 1 shows a device in the form of a cell phone 1 while executing a global navigation satellite application resulting in the display of a relevant map 2 on a touch screen 3. As is diagrammatically illustrated in figure 1 A the cell phone incorporates a processor 3A arranged to process data supplied from the touch screen 3 or received from an antenna 4 in accordance with instructions executing from machine readable code recorded in a memory 3B. As is well known, the cell phone 1 may interface with the user via the touch screen to receive instructions and to display the instant location of the cell phone and a route to a destination to which the user wishes to navigate. The route may include roads from which pedestrians are excluded and footpaths from which vehicular traffic is excluded. To optimise the route it is therefore important that the cell phone 1 selects the route for navigation in accordance with the mode of travel, in this case the modes are pedestrian or road modes.

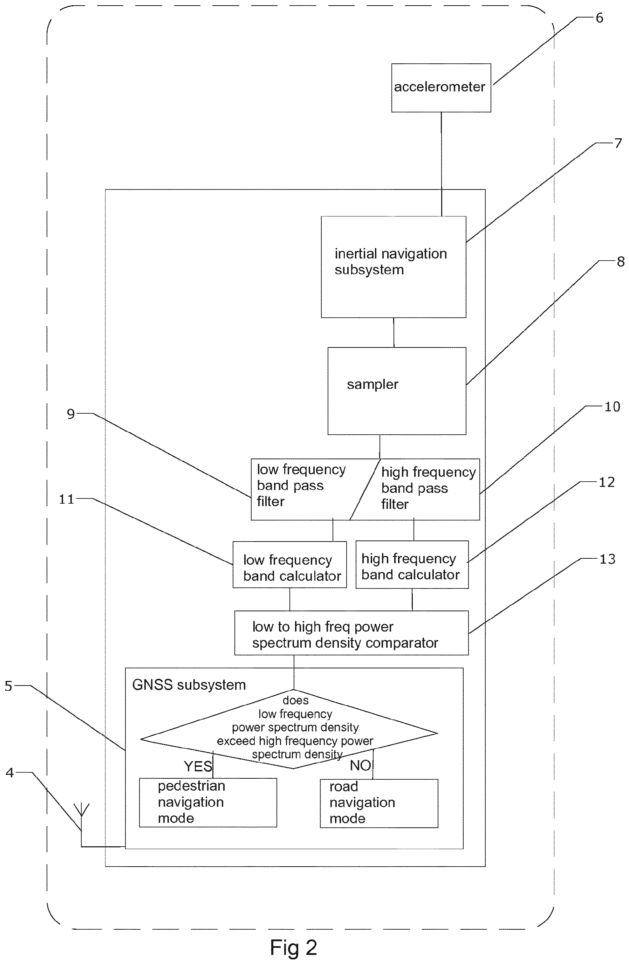

As shown diagrammatically in figure 2 the cell phone 1 includes a global positioning system (GPS) antenna 4 able to receive global positioning system radio GPS signals from satellites in known fashion. The GPS signals are delivered to a global navigation satellite subsystem (GNSS) 5.

An inertial sensor in the form of an accelerometer 6 is included in cell phone 1 which is sensitive to accelerations of the cell phone 1. When the GNSS is initiated as at step S1, signals from the inertial sensor are processed by an inertial navigation subsystem 7 and used to calculate the speed and heading of the cell phone at step S2. If the speed calculated from the inertial sensor is incompatible with a pedestrian speed for example a speed in excess of 21 km/h, the cell phone implements a road navigation mode in GNSS 5. However, if the speed calculated at step S2 is a possible pedestrian speed the process implements a navigation mode discrimination routine at step S3.

The mode discrimination routine samples the frequency of excitations of the inertial sensor 6 at sampler 8 and step S4 and filters sample through low band pass filter 9 and high band pass filter 10 at steps S5 and S6 respectively. The low band pass filter filters signals between 2Hz and 10Hz while the high band pass filter filters between 10 Hz and 25 Hz. The low band signal is supplied to a low frequency band calculator 11 which calculates the low frequency band power spectrum density (PSD1) at step S7.

The high frequency band signal is used by calculator 12 at step S8 to calculate a high frequency band power spectrum density (PSD2). At step S9 a calculator calculates the ratio of the low frequency power spectrum density (PSD1) to the high frequency power spectrum density (PSD2) to generate the power spectrum density ratio (PSDR). In the simplest variant of the invention the calculator may generate a navigation mode selection signal based solely on whether or not the PSDR is greater than or less than one. If the PSDR is greater than one, the low frequency excitations are dominant and the pedestrian mode should be selected. If the PSDR is less than one, the high frequency excitations are dominant and the road navigation mode is selected. However, this simple variant does not deal well with situations where each signal is weak or the power spectrum densities are close in value.

To address the aforementioned problem the process goes to step S10 where the low frequency band power spectrum density is compared with a first threshold. If the low frequency power spectrum density is less than the first threshold value, the process generates a navigation mode selection signal causing selection of the road mode for navigation.

If at step S10 the low frequency band power spectrum density exceeds the first threshold, then at step S11 the low frequency band power spectrum density is compared to a second threshold, which in this case is the double threshold at step S11. The term "double threshold" is used to indicate the value of the first threshold multiplied by a factor 2.

If the second threshold is not exceeded, the power spectrum density ratio is compared to a high spectrum density ratio threshold in step S12. In this case the high spectrum density ratio threshold is 1.5 times the value of the first threshold to determine if the low frequency excitations are dominant. Thus if the low frequency band spectrum density is one and one half times the high frequency band spectrum density the system and process determines that the device is being carried by a pedestrian. The pedestrian mode selection signal is generated accordingly and the GNSS subsystem responds to implement a pedestrian navigation mode at step S13.

If the second threshold is exceeded at step S11 step 14 compares the power spectrum density ratio to a lower power spectrum density threshold ratio. In this case the lower power spectrum density ratio threshold is 0.75. If the lower power spectrum density ratio threshold is not exceeded the process goes to step S14 where a road mode selection signal is generated and the GNSS responds to implement road navigation. If the lower power spectrum density ratio threshold is exceeded the process causes the system to generate a pedestrian mode selection signal which causes the GNSS subsystem to implement the pedestrian navigation mode at step S13.

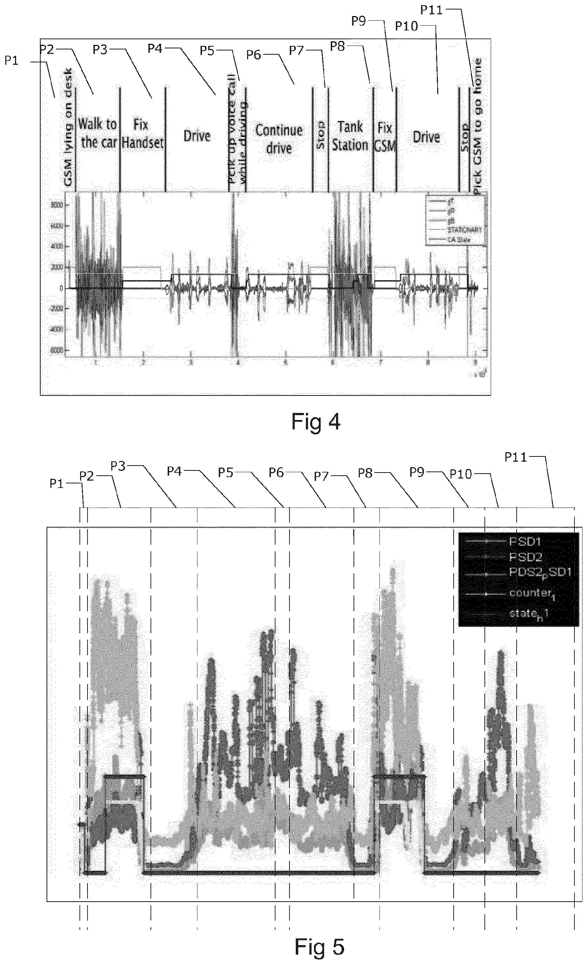

Figure 4 is a chart of an inertial sensor excitation sample taken during a combined pedestrian and road navigation with time plotted on the X axis increasing from left to right and the excitations in low and high frequency bands plotted on the Y axis. The blue line is the low frequency band sample while the red line indicates the high frequency band sample. Figure 5 shows the power spectrum density plotted on the Y axis with time on the X axis. The scaling is slightly different for each graph however the correlation between the transport modes is readily apparent. In the first period P1 the cell phone is lying on a desk and is immobile. Little or no excitation of either low or high frequency band is detected. In the subsequent period P2, the cell phone 1 is carried to the car by a walking user. In figure 5 the power spectrum density of the low frequency band greatly exceeds the high frequency band power spectrum density indicative of pedestrian travel, if GNSS navigation was activated, pedestrian mode would readily be identified and selected by the process. In the subsequent period 3, the user fixes the cell phone into a dashboard mounting. The recording shows each of low and high frequency excitations in relatively similar amounts as the cell phone is manipulated. However, the criteria at step S10 requiring the low frequency power spectrum density to exceed a minimum threshold to stop pedestrian mode selection, results in road mode selection although the high frequency power spectrum density is lower than the low frequency power spectrum density in the third period.

During the fourth period P4 the vehicle engine is started and the vehicle driven away. The high frequency power spectrum density rises quickly to greatly exceed the low frequency power spectrum density ensuring that at any speed, road mode navigation is selected. During road mode navigation, frequent rapid changes of heading are blocked in the GNSS.

During the fifth period P5, the cell phone is handled by the user picking up a cell phone call. As shown in figure 4, this results in considerable excitation in the high frequency band which can include rapid changes of direction unconnected with the overall motion of the vehicle. However, the high frequency power spectrum density remains dominant in figure 5 and no change of navigation mode will occur. As before, maintenance of the road navigation mode blocks rapid changes in heading in the GNSS.

The sixth period P6 is substantially similar to the fourth period of driving. During the seventh period P7 the vehicle comes to a halt at a fuel station and the user exits the vehicle during eighth period P8 and undertakes pedestrian activities. The low frequency power spectrum density is clearly dominant over the high frequency power spectrum density and the cell phone would switch to pedestrian mode navigation.

The ninth period P9 activity is essentially similar to the third period P3 as the user returns to the vehicle, remounts the cell phone and drives away at period P10. At the 11^{th} period P11 the driver stops the vehicle, removes the cell phone from the mount and walks away. The low frequency power spectrum density rises to dominate the high frequency power spectrum density and the cell phone switches to pedestrian navigation mode.

It will be appreciated by the skilled person that cell phones, personal digital assistants and dedicated man portable global navigation satellite system devices commonly incorporate an inertial sensor and can therefore be adapted to implement the components and process described above by loading and/or updating code to execute in a processor of the device. The code to implement the process may be loaded onto device memory via a USB port, bluetooth, WiFi, GSM or other compatible technologies for recordal in a device memory and execution on the device processor.

## Claims

1. A portable device (1) including a navigation system comprising:
a global navigation satellite subsystem (5), an inertial navigation subsystem (7),
an inertial sensor (6) and a processor (3A);
the processor (3A) being responsive to signals output by said global navigation satellite subsystem (5) and said inertial navigation subsystem (7) to implement a navigation mode discrimination system for selecting one of a pedestrian navigation mode or a road navigation mode;
**characterized in that** said navigation mode discrimination system is arranged to sample signals output from the inertial sensor (6) to take the frequency of excitations of signals output from the inertial sensor (6) and determine one of the navigation modes based on the frequency of excitations of said inertial sensor (6),
the device further comprising:
a sampler to sample signals output from the inertial sensor (6) to take the frequency of excitations of signals from the inertial sensor;
a low band filter (9) and a high band filter (10) for filtering the inertial frequency sample to a low frequency band sample and a high frequency band sample,
a calculator module (13) responsive to each of said low frequency band sample and said high frequency band sample for calculating a low frequency band power spectrum density and a high frequency band power spectrum density,
a comparator configured to compare the low frequency band power spectrum density and the high frequency band power spectrum density to generate a mode selection signal; and
the global navigation satellite subsystem being responsive to the mode selection signal to select one of the navigation modes,
wherein the low frequency band filter (9) is adapted to filter a low frequency band selected to isolate excitations arising when the device is carried by a pedestrian and the high frequency band filter (10) is adapted to filter a high frequency band to isolate excitations experienced by the device carried in a motor vehicle,
wherein a comparator is arranged to compare the low frequency power spectrum density with a first predetermined threshold and where the device is configured to select the road navigation mode when the low frequency power spectrum density is smaller than said first threshold (S7),
wherein a comparator is arranged to compare the low frequency spectrum density with a second predetermined threshold larger than the first threshold (S11),
a calculator to calculate a ratio of the low frequency band power spectrum density and the high frequency band power spectrum density to generate a power spectrum density ratio; and
a comparator arranged to compare the power spectrum density ratio with a high power spectrum density ratio threshold;
whereby the system is arranged generate the mode selection signal to select
the pedestrian navigation mode when the low frequency spectrum density is between the first threshold (S10) and the second threshold (S11) and the power
spectrum density ratio exceeds the high spectrum density ratio threshold (S12) and the road navigation mode when the power spectrum density ratio is less than the high power spectrum density ration (S12).

2. A device according to claim 1 wherein the low frequency band filter (9) is adapted to filter a frequency band between 2Hz and 10Hz and the high frequency band filter (10) is adapted to filter a frequency band between10Hz and 25Hz.

3. A device according to claim 1 or 2 wherein the system is arranged so that when:
the low frequency spectrum density exceeds the second threshold, and
the power spectrum density ratio is greater than a lower spectrum density ratio threshold,
the mode selection signal is generated to select the pedestrian navigation mode; and
the low frequency spectrum density exceeds the second threshold, and
the power spectrum density ratio is less than the lower spectrum density ratio threshold the mode selection signal is generated to select the road navigation mode.

4. A device according to any one of the preceding claims wherein a timer is set to delay a switch from the pedestrian navigation mode to the road navigation mode when the mode discrimination routine responds to the inertial frequency sample to implement a change from the pedestrian navigation mode to the road navigation mode.

5. A device according to any one of the preceding claims wherein the device is a communication device.

6. A navigation process implemented in a portable device having an inertial sensor (6) comprising the steps of:
executing a global navigation satellite routine and an inertial navigation routine,
said inertial navigation routine responsive to signals output from the inertial sensor (6), and including:
a navigation mode discrimination routine **characterized by** the step of sampling signals output from the inertial sensor (6) to take the frequency of excitations of signals output from the inertial sensor (6), and processing the inertial frequency sample to determine a pedestrian navigation mode or a road navigation mode,
the navigation process further comprising the steps of:
filtering the frequency sample to isolate a low frequency band and a high frequency band, the low frequency band filtering being adapted to isolate excitations when the device is carried by a pedestrian and the high frequency band filtering being adapted to isolate excitations when the device is carried by a motor vehicle,
selecting the road navigation mode when the low frequency spectrum density is lower than a predetermined first threshold,
calculating the power spectrum density of the low frequency band and the high frequency band;
comparing the power spectrum density of the low frequency band and the high frequency band;
selecting the navigation mode according to the comparison of the power spectrum density of the low frequency band and the high frequency band;
calculating a ratio of the low frequency band power spectrum density to the high frequency band power spectrum density to generate a power spectrum density ratio;
selecting the pedestrian navigation mode when the low frequency band power spectrum density is between the first and second thresholds and the power spectrum density ratio is greater than a high spectrum density ratio threshold, and
selecting a road navigation mode when the low frequency power spectrum density is between the first and second thresholds and the power spectrum density ratio is less than the high power spectrum density ratio threshold.

7. A navigation process according to claim 6 wherein the low frequency band isolates excitations arising when the device is carried by a pedestrian, and the high frequency band isolates excitations experienced as a consequence of the device being carried in a motor vehicle.

8. A process according to claim 7 wherein the low frequency band is in the range 2Hz to 10Hz and the high frequency band is in the range from 10 Hz to 25 Hz.

9. A process according to any one of claims 6 to 8 of selecting pedestrian navigation mode when the low frequency spectrum density exceeds the second threshold, and
the power spectrum density ratio is greater than a lower power spectrum density ratio threshold; and
selecting road navigation mode when the low frequency spectrum density exceeds the second threshold, and the power spectrum density ratio is less than the lower power spectrum density ratio threshold.

10. A process according to any one of the preceding claims 7 to 9 wherein
when the discrimination routine selects the road navigation mode from the pedestrian navigation mode the implementation of said road navigation mode is delayed by a timer.

## Patentansprüche

1. Tragbare Einrichtung (1), die ein Navigationssystem beinhaltet, umfassend:
ein globales Navigationssatelliten-Subsystem (5), ein Trägheitsnavigations-Subsystem (7), einen Trägheitssensor (6) und einen Prozessor (3A);
wobei der Prozessor (3A) auf Signale, die durch das globale Navigationssatelliten-Subsystem (5) und das Trägheitsnavigations-Subsystem (7) ausgegeben werden, reagiert, um ein Navigationsmodus-Unterscheidungssystem zum Auswählen eines Fußgängernavigationsmodus oder eines Straßennavigationsmodus zu implementieren;
**dadurch gekennzeichnet, dass** das Navigationsmodus-Unterscheidungssystem dazu ausgelegt ist, Signale, die vom Trägheitssensor (6) ausgegeben werden, abzutasten, um die Anregungsfrequenz von Signalen, die vom Trägheitssensor (6) ausgegeben werden, zu nehmen und einen der Navigationsmodi basierend auf der Anregungsfrequenz des Trägheitssensors (6) zu bestimmen,
wobei die Einrichtung ferner Folgendes umfasst:
einen Sampler zum Abtasten von Signalen, die vom Trägheitssensor (6) ausgegeben werden, um die Anregungsfrequenz von Signalen vom Trägheitssensor zu nehmen;
ein Tiefbandfilter (9) und ein Hochbandfilter (10) zum Filtern des Trägheitsfrequenzabtastwerts zu einem Niederfrequenzband-Abtastwert und einem Hochfrequenzband-Abtastwert,
ein Kalkulatormodul (13), das auf sowohl den Niederfrequenzband-Abtastwert als auch den Hochfrequenzband-Abtastwert reagiert, um eine Niederfrequenzband-Leistungsspektrumdichte und eine Hochfrequenzband-Leistungsspektrumdichte zu berechnen,
einen Komparator, der zum Vergleichen der Niederfrequenzband-Leistungsspektrumdichte und der Hochfrequenzband-Leistungsspektrumdichte konfiguriert ist, um ein Modusauswahlsignal zu erzeugen; und
wobei das globale Navigationssatelliten-Subsystem auf das Modusauswahlsignal reagiert, um einen der Navigationsmodi auszuwählen,
wobei das Niederfrequenzbandfilter (9) dazu ausgelegt ist, ein Niederfrequenzband zu filtern, das zum Isolieren von Anregungen, die auftreten, wenn die Einrichtung durch einen Fußgänger getragen wird, ausgewählt wird, und das Hochfrequenzbandfilter (10) dazu ausgelegt ist, ein Hochfrequenzband zu filtern, um Anregungen, die durch die in einem Kraftfahrzeug geführte Einrichtung erfahren werden, zu isolieren,
wobei ein Komparator dazu ausgelegt ist, die Niederfrequenz-Leistungsspektrumdichte mit einer ersten vorbestimmten Schwelle zu vergleichen und wobei die Einrichtung zum Auswählen des Straßennavigationsmodus konfiguriert ist, wenn die Niederfrequenz-Leistungsspektrumdichte kleiner als die erste Schwelle ist (S7);
wobei ein Komparator dazu ausgelegt ist, die Niederfrequenz-Spektrumdichte mit einer zweiten vorbestimmten Schwelle zu vergleichen, die größer als die erste Schwelle ist (S11),
einen Kalkulator zum Berechnen eines Verhältnisses der Niederfrequenzband-Leistungsspektrumdichte und der Hochfrequenzband-Leistungsspektrumdichte, um ein Leistungsspektrumdichteverhältnis zu erzeugen; und
wobei ein Komparator dazu ausgelegt ist, das Leistungsspektrumdichteverhältnis mit einer hohen Leistungsspektrumdichteverhältnisschwelle zu vergleichen;
wobei das System dazu ausgelegt ist, das Modusauswahlsignal zum Auswählen des Fußgängernavigationsmodus, wenn die Niederfrequenz-Spektrumdichte zwischen der ersten Schwelle (S10) und der zweiten Schwelle (S11) liegt und das Leistungsspektrumdichteverhältnis die hohe Spektrumdichteverhältnisschwelle überschreitet (S12), und des Straßennavigationsmodus, wenn das Leistungsspektrumdichteverhältnis kleiner als das hohe Leistungsspektrumdichteverhältnis ist (S12), zu erzeugen.

2. Einrichtung nach Anspruch 1, wobei das Niederfrequenzbandfilter (9) dazu ausgelegt ist, ein Frequenzband zwischen 2 Hz und 10 Hz zu filtern, und das Hochfrequenzbandfilter (10) dazu ausgelegt ist, ein Frequenzband zwischen 10 Hz und 25 Hz zu filtern.

3. Einrichtung nach Anspruch 1 oder 2, wobei das System so ausgelegt ist, dass, wenn:
die Niederfrequenz-Spektrumdichte die zweite Schwelle überschreitet und das Leistungsspektrumdichteverhältnis größer als eine niedrigere Spektrumdichteverhältnisschwelle ist,
das Modusauswahlsignal erzeugt wird, um den Fußgängernavigationsmodus auszuwählen;
und
die Niederfrequenz-Spektrumdichte die zweite Schwelle überschreitet und das Leistungsspektrumdichteverhältnis kleiner als die niedrigere Spektrumdichteverhältnisschwelle ist, das Modusauswahlsignal erzeugt wird, um den Straßennavigationsmodus auszuwählen.

4. Einrichtung nach einem der vorangegangenen Ansprüche, wobei ein Timer eingestellt ist, einen Wechsel vom Fußgängernavigationsmodus zum Straßennavigationsmodus zu verzögern, wenn die Modusunterscheidungsroutine auf den Trägheitsfrequenzabtastwert reagiert, um eine Änderung vom Fußgängernavigationsmodus zum Straßennavigationsmodus zu implementieren.

5. Einrichtung nach einem der vorangegangenen Ansprüche, wobei die Einrichtung eine Kommunikationseinrichtung ist.

6. Navigationsprozess, der in einer tragbaren Einrichtung mit einem Trägheitssensor (6) implementiert wird, die folgenden Schritte umfassend:
Ausführen einer globalen Navigationssatelliten-Routine und einer Trägheitsnavigations-Routine,
wobei die Trägheitsnavigations-Routine auf Signale, die vom Trägheitssensor (6) ausgegeben werden, reagiert und Folgendes beinhaltet:
eine Navigationsmodusunterscheidungsroutine, die durch den Schritt des Abtastens von Signalen, die vom Trägheitssensor (6) ausgegeben werden, um die Anregungsfrequenz von Signalen, die vom Trägheitssensor (6) ausgegeben werden, zu nehmen und des Verarbeitens des Trägheitsfrequenzabtastwerts, um einen Fußgängernavigationsmodus oder einen Straßennavigationsmodus zu bestimmen, gekennzeichnet ist, wobei der Navigationsprozess ferner die folgenden Schritte umfasst:
Filtern des Frequenzabtastwerts, um ein Niederfrequenzband und ein Hochfrequenzband zu isolieren, wobei das Niederfrequenzbandfiltern dazu ausgelegt ist, Anregungen zu isolieren, wenn die Einrichtung durch einen Fußgänger getragen wird, und das Hochfrequenzbandfiltern dazu ausgelegt ist, Anregungen zu isolieren, wenn die Einrichtung durch ein Kraftfahrzeug geführt wird,
Auswählen des Straßennavigationsmodus, wenn die Niederfrequenz-Spektrumdichte geringer als eine vorbestimmte erste Schwelle ist,
Berechnen der Leistungsspektrumdichte des Niederfrequenzbands und des Hochfrequenzbands;
Vergleichen der Leistungsspektrumdichte des Niederfrequenzbands und des Hochfrequenzbands;
Auswählen des Navigationsmodus gemäß dem Vergleich der Leistungsspektrumdichte des Niederfrequenzbands und des Hochfrequenzbands;
Berechnen eines Verhältnisses der Niederfrequenzband-Leistungsspektrumdichte zur Hochfrequenzband-Leistungsspektrumdichte, um ein Leistungsspektrumdichteverhältnis zu erzeugen;
Auswählen des Fußgängernavigationsmodus, wenn die Niederfrequenzband-Leistungsspektrumdichte zwischen der ersten und der zweiten Schwelle liegt und das Leistungsspektrumdichteverhältnis größer als eine hohe Spektrumdichteverhältnisschwelle ist, und
Auswählen eines Straßennavigationsmodus, wenn die Niederfrequenz-Leistungsspektrumdichte zwischen der ersten und der zweiten Schwelle liegt und das Leistungsspektrumdichteverhältnis kleiner als die hohe Spektrumdichteverhältnisschwelle ist.

7. Navigationsprozess nach Anspruch 6, wobei das Niederfrequenzband Anregungen isoliert, die auftreten, wenn die Einrichtung durch einen Fußgänger getragen wird, und das Hochfrequenzband Anregungen isoliert, die dadurch, dass die Einrichtung in einem Kraftfahrzeug geführt wird, erfahren werden.

8. Prozess nach Anspruch 7, wobei das Niederfrequenzband im Bereich von 2 Hz bis 10 Hz liegt und das Hochfrequenzband im Bereich von 10 Hz bis 25 Hz liegt.

9. Prozess nach einem der Ansprüche 6 bis 8 des Auswählens des Fußgängernavigationsmodus, wenn die Niederfrequenz-Spektrumdichte die zweite Schwelle überschreitet und das Leistungsspektrumdichteverhältnis größer als eine niedrigere Leistungsspektrumdichteverhältnisschwelle ist; und des Auswählens des Straßennavigationsmodus, wenn die Niederfrequenz-Spektrumdichte die zweite Schwelle überschreitet und das Leistungsspektrumdichteverhältnis kleiner als die niedrigere Leistungsspektrumdichteverhältnisschwelle ist.

10. Prozess nach einem der vorangegangenen Ansprüche 7 bis 9, wobei,
wenn die Unterscheidungsroutine den Straßennavigationsmodus vom Fußgängernavigationsmodus auswählt, die Implementierung des Straßennavigationsmodus durch einen Timer verzögert wird.

## Revendications

1. Dispositif portatif (1) comportant un système de navigation comprenant :
un sous-système de satellite de navigation globale (5), un sous-système de navigation inertielle (7), un capteur inertiel (6) et un processeur (3A) ;
le processeur (3A) répondant à des signaux produits par ledit sous-système de satellite de navigation globale (5) et ledit sous-système de navigation inertielle (7) pour mettre en oeuvre un système de discrimination de mode de navigation afin de sélectionner l'un d'un mode de navigation pédestre ou d'un mode de navigation routière ;
**caractérisé en ce que** ledit système de discrimination de mode de navigation est agencé pour échantillonner des signaux produits par le capteur inertiel (6) afin d'utiliser la fréquence des excitations des signaux produits par le capteur inertiel (6) et déterminer l'un des modes de navigation en fonction de la fréquence des excitations dudit capteur inertiel (6),
le dispositif comprenant en outre :
un échantillonneur pour échantillonner les signaux produits par le capteur inertiel (6) et utiliser la fréquence des excitations des signaux provenant du capteur inertiel ;
un filtre bande basse (9) et un filtre bande haute (10) pour filtrer l'échantillon de fréquence inertielle pour produire un échantillon de bande de fréquence basse et un échantillon de bande de fréquence haute,
un module de calcul (13) répondant à chacun dudit échantillon de bande de fréquence basse et dudit échantillon de bande de fréquence haute pour calculer une densité spectrale de puissance de bande de fréquence basse et une densité spectrale de puissance de bande de fréquence haute,
un comparateur configuré pour comparer la densité spectrale de puissance de bande de fréquence basse et la densité spectrale de puissance de bande de fréquence haute pour générer un signal de sélection de mode ; et
le sous-système de satellite de navigation globale répondant au signal de sélection de mode pour sélectionner l'un des modes de navigation,
dans lequel le filtre de bande de fréquences basses (9) est adapté pour filtrer une bande de fréquences basses sélectionnée pour isoler les excitations se produisant quand le dispositif est porté par un piéton et le filtre de bande de fréquences hautes (10) est adapté pour filtrer une bande de fréquences hautes pour isoler les excitations subies par le dispositif transporté dans un véhicule motorisé,
dans lequel un comparateur est agencé pour comparer la densité spectrale de puissance de fréquences basses à un premier seuil prédéterminé et le dispositif étant configuré pour sélectionner le mode de navigation routière quand la densité spectrale de puissance de fréquences basses est inférieure audit premier seuil (S7),
dans lequel un comparateur est agencé pour comparer la densité spectrale de fréquences basses à un second seuil prédéterminé supérieur au premier seuil (S11),
un calculateur pour calculer un rapport de la densité spectrale de puissance de bande de fréquences basses et la densité spectrale de puissance de bande de fréquences hautes pour générer un rapport de densités spectrales de puissance ; et
un comparateur agencé pour comparer le rapport de densités spectrales de puissance à un seuil de rapport de densités spectrales de puissance haut ;
moyennant quoi le système est agencé pour générer le signal de sélection de mode afin de sélectionner le mode de navigation pédestre quand la densité spectrale de fréquences basses est comprise entre le premier seuil (S10) et le second seuil (S11) et le rapport de densités spectrales de puissance dépasse le seuil de rapport de densités spectrales haut (S12)
et
le mode de navigation routière quand le rapport de densités spectrales de puissance est inférieur au rapport de densités spectrales de puissance haut (S12).

2. Dispositif selon la revendication 1 dans lequel le filtre de bande de fréquences basses (9) est adapté pour filtrer une bande de fréquences entre 2 Hz et 10 Hz et le filtre de bande de fréquences hautes (10) est adapté pour filtrer une bande de fréquences entre 10 Hz et 25 Hz.

3. Dispositif selon la revendication 1 ou 2 dans lequel le système est agencé de telle sorte que quand :
la densité spectrale de fréquences basses dépasse le second seuil, et
le rapport de densités spectrales de puissance est supérieur à un seuil de rapport de densités spectrales bas,
le signal de sélection de mode soit généré pour sélectionner le mode de navigation pédestre ;
et
la densité spectrale de fréquences basses dépasse le second seuil, et
le rapport de densités spectrales de puissance est inférieur au seuil de rapport de densités spectrales bas, le signal de sélection de mode soit généré pour sélectionner le mode de navigation routière.

4. Dispositif selon l'une quelconque des revendications précédentes dans lequel une temporisation est réglée pour retarder une commutation du mode de navigation pédestre au mode de navigation routière quand le sous-programme de discrimination de mode répond à l'échantillon de fréquence inertielle pour mettre en oeuvre un changement du mode de navigation pédestre au mode de navigation routière.

5. Dispositif selon l'une quelconque des revendications précédentes, le dispositif étant un dispositif de communication.

6. Processus de navigation dans un dispositif portatifs comportant un capteur inertiel (6) comprenant les étapes consistant à :
exécuter un sous-programme de satellite de navigation globale et un sous-programme de navigation inertielle,
ledit sous-programme de navigation inertielle répondant à des signaux produits par le capteur inertiel (6), et comportant :
un sous-programme de discrimination de mode de navigation **caractérisé par** l'étape d'échantillonnage des signaux produits par le capteur inertiel (6) afin d'utiliser la fréquence des excitations des signaux produits par le capteur inertiel (6), et de traitement de l'échantillon de fréquence inertielle pour déterminer un mode de navigation pédestre ou un mode de navigation routière,
le processus de navigation comprenant en outre les étapes consistant à :
filtrer l'échantillon de fréquence pour isoler une bande de fréquences basses et une bande de fréquences hautes, le filtrage de bande de fréquences basses étant adapté pour isoler les excitations quand le dispositif est porté par un piéton et le filtrage de bande de fréquences hautes étant adapté pour isoler les excitations quand le dispositif est transporté par un véhicule motorisé,
sélectionner le mode de navigation routière quand la densité spectrale de fréquences basses est inférieure à un premier seuil prédéterminé,
calculer la densité spectrale de puissance de la bande de fréquences basses et de la bande de fréquences hautes ;
comparer la densité spectrale de puissance de la bande de fréquences basses et la bande de fréquences hautes ;
sélectionner le mode de navigation conformément à la comparaison de la densité spectrale de puissance de la bande de fréquences basses et de la bande de fréquences hautes ;
calculer un rapport de la densité spectrale de puissance de bande de fréquences basses et de la densité spectrale de puissance de bande de fréquences hautes pour générer un rapport de densités spectrales de puissance ;
sélectionner le mode de navigation pédestre quand la densité spectrale de puissance de fréquences basses est comprise entre les premier et second seuils et le rapport de densités spectrales de puissance dépasse le seuil de rapport de densités spectrales haut,
et
sélectionner le mode de navigation routière quand la densité spectrale de puissance de fréquences basses est comprise entre les premier et second seuils et le rapport de densités spectrales de puissance est inférieur au seuil de rapport de densités spectrales de puissance haut.

7. Processus de navigation selon la revendication 6 dans lequel la bande de fréquences basses isole les excitations se produisant quand le dispositif est porté par un piéton, et la bande de fréquences hautes isole les excitation subies lorsque le dispositif est transporté dans un véhicule motorisé.

8. Processus selon la revendication 7 dans lequel la bande de fréquences basses est comprise dans la gamme de 2 Hz à 10 Hz et la bande de fréquences hautes est comprise dans la gamme de 10 Hz à 25 Hz.

9. Processus selon l'une quelconque des revendications 6 à 8 de sélection du mode de navigation pédestre quand la densité spectrale de fréquences basses dépasse le second seuil, et
le rapport de densités spectrales de puissance est supérieur à un seuil de rapport de densités spectrales bas ; et
la sélection du mode de navigation routière quand la densité spectrale de fréquences basses dépasse le second seuil, et le rapport de densités spectrales de puissance est inférieur au seuil de rapport de densités spectrales de puissance bas.

10. Processus selon l'une quelconque des revendications 7 à 9 dans lequel
quand le sous-programme de discrimination sélectionne le mode de navigation routière après le mode de navigation pédestre, la mise en oeuvre dudit mode de navigation routière est retardée par une temporisation.
